# EUROPEAN PATENT APPLICATION

(11) **EP 4 518 242 A1**
(43) Date of publication of application: **05.03.2025**
(21) Application number: 24196361.0
(22) Date of filing: 26.08.2024
(51) Int. Cl.: H04L 9/30

(54) **ELECTRONIC CONTROL UNIT, APPARATUS, DATA CARRIER, COMPUTER PROGRAM, AND METHOD FOR SECURING A VEHICLE AGAINST QUANTUM COMPUTER-BASED SECURITY THREATS**

(30) Priority: 28.08.2023 DE 102023123127
(71) Applicant: Continental Automotive Technologies GmbH, 30175 Hannover (DE); Elektrobit Automotive GmbH, 91058 Erlangen (DE)
(72) Inventor: Heymann, Maurice, 30175 Hannover (DE); Henning, Hannes, 91058 Erlangen (DE); Griesser, Florian, 91058 Erlangen (DE); Müller, Lars Christian, 91058 Erlangen (DE); Hamidi, Anahita, 91058 Erlangen (DE)
(74) Representative: Continental Corporation

(57) **Abstract**

Embodiments of the present disclosure relate to an electronic control unit, an apparatus, a data carrier, a computer program, and a method for securing a vehicle against quantum computer-based security threats. The method comprises providing a crypto (cryptographic/cryptography) software stack comprising an upper layer including a crypto (cryptographic/cryptography) service manager and a lower layer including a crypto driver which includes one or more post-quantum cryptography (PQC) primitives. Further, the method includes forwarding a request for a cryptographic service from the crypto service manager to the crypto driver and providing, by the crypto (cryptographic/cryptography) driver, one or more of the PQC primitives for providing the requested cryptographic service.

## Description

Embodiments of the present disclosure relate to an electronic control unit, an apparatus, a data carrier, a computer program, and a method for securing a vehicle against quantum computer-based security threats. In particular, the present disclosure relates to a concept for implementing post-quantum cryptography (PQC) primitives in vehicles.

Cyber security plays an increasingly important role in various applications including automotive applications.

In particular, cyber security may be used particularly for the following use cases:

### 1) Secure Session Establishment:

In the automotive industry, the effective management and control of numerous devices connected to a backend system over IP-based networks, be it local, wide-area, or mobile, necessitate the establishment of a secure channel to ensure confidential and authentic communication. This is of paramount importance for various crucial use cases, such as fleet management of cars or trucks, the collection and aggregation of sensor data. These use cases heavily rely on IP-based communication protocols due to their inherent scalability and ability to accommodate the required services. By employing secure channels, automotive companies can safeguard sensitive information, ensure the integrity and authenticity of data, and mitigate potential threats posed by unauthorized access or malicious activities. This is particularly critical in industries where the consequences of compromised communication could lead to severe financial losses, safety hazards, or disruptions in critical infrastructure. Secure communication channels facilitate the secure transmission of data between backend systems and connected devices, allowing for effective management, monitoring, and control of various automotive applications. They enable real-time access to vehicle telemetry, remote diagnostics, software updates, and control commands, while maintaining data confidentiality, authentication, and integrity. In summary, establishing secure channels in the automotive domain is vital to ensure confidential and authentic communication, protect sensitive data, and enable efficient management and control of connected devices. By leveraging scalable IP-based communication protocols, automotive companies can effectively address the requirements of diverse use cases, providing a robust foundation for reliable and secure operations in the automotive world.

### 2) Secure Software Download:

The use case of a secure download mechanism plays a vital role in ensuring that solely authenticated software is flashed onto an Electronic Control Unit (ECU). By utilizing asymmetric signatures, the mechanism effectively prevents attackers from flashing manipulated software onto an ECU. The signature, accompanied by the software to be flashed, undergoes the process of being signed with a private key within a trusted environment, typically the backend. The corresponding public key, essential for the verification process, must be enrolled in the ECU and securely stored in tamper-protected storage or has to be encrypted with a secured symmetric key. In the process of flashing software, the ECU typically initiates a dedicated bootloader, which serves as an intermediary stage. The bootloader, situated within the ECU, receives the software from a predetermined source, such as the communication unit or the onboard diagnosis interface. Subsequently, the software is downloaded into the ECU's memory, and the boot flags are adjusted accordingly. As an integral part of the bootloader, the secure software download mechanism performs a crucial signature verification step before proceeding with the flashing process. Only upon successful signature verification, indicating the authenticity and integrity of the software, does the bootloader proceed to flash the software onto the ECU. By implementing the secure download mechanism, which leverages asymmetric signatures and integrates it within the bootloader, the research ensures that exclusively authenticated software, validated through thorough signature verification, is flashed onto the ECU. This mechanism serves as a fundamental security measure, effectively mitigating the risk of manipulated software infiltration and upholding the integrity and reliability of the ECU's functionality.

### 3) Secure Access Control:

Secure access control is a critical requirement in automotive ECUs to limit access to specific services and data, such as flashing operations. Only authorized entities, including manufacturers and car service stations, should be able to unlock these operations. By implementing challenge-response schemes, only authorized entities can access specific services and data, safeguarding against unauthorized use and potential security breaches. Furthermore, the adoption of these cryptographic techniques, such as signatures, MACs, and encryption, enhances overall system security by ensuring the authenticity and integrity of communication. Additionally, the integration of these schemes with industry-standard architectures like AUTOSAR facilitates compatibility and promotes the adoption of secure access control mechanisms in automotive systems. Implementing and evaluating these schemes in a demonstrator allows for practical validation of their effectiveness and suitability in real-world automotive environments, paving the way for enhanced security measures in future automotive systems.

However, available security solutions may not provide sufficient protection against quantum computer-based security threats.

Hence, there may be a demand for an improved cyber security concept.

This demand may be satisfied by the subject-matter of the appended independent claims. Optional embodiments of the present disclosure are disclosed in the appended dependent claims.

Embodiments of the present disclosure provide a method for securing a vehicle against quantum computer-based security threats. The method comprises providing a crypto (cryptographic/cryptography) software stack comprising an upper layer including a crypto (cryptographic/cryptography) service manager (CSM) and a lower layer including a crypto driver which includes one or more post-quantum cryptography (PQC) primitives. Further, the method includes forwarding a request for a cryptographic service from the CSM to the crypto driver and providing, by the crypto (cryptographic/cryptography) driver, one or more of the PQC primitives for providing the requested cryptographic service. This particularly allows the integration of PQC in a modular software stack. So, the proposed solution allows to combine the advantages including interoperability, modularization, and portability of a modular software architecture (see, e.g., the AUTOSAR standard) and protection from quantum computer-based security threats. Embodiments may further comprise a crypto interface configured for linking a crypto driver object of a crypto driver (in a middle layer between the upper and lower layer) to the crypto service manager.

In practice, the proposed approach, e.g., may be applied for the encapsulation and/or generation of a signature. Accordingly, the cryptographic service may comprise key encapsulation and/or generation of a signature.

So, in some embodiments, the PQC primitives include one or more primitives of a post-quantum secure signature scheme for key generation, signature generation and/or signature verification. For this, the PQC primitives, e.g., include the PQC primitive "CRYSTALS-Dilithium".

The method may further comprise generating a key and/or a signature using the key, and/or verifying a signature for post-quantum secure communication.

In some embodiments, the signature scheme is implemented in a central key generation function configured to provide different key generation algorithms including a key generation primitive of the post-quantum secure signature scheme. This allows interoperability with various software applications compatible with the central key generation function.

In some embodiments, a mapping of key elements to key element identifiers may be desired. Accordingly, some embodiments of the present disclosure, the method further comprises providing a key element index for mapping key elements of the signature scheme to a key element identifier of the requested cryptographic service.

The PQC primitives may alternatively or additionally comprise one or more primitives of a post-quantum secure key encapsulation mechanism for key generation, key encapsulation, and/or key decapsulation. For this, the PQC primitives may comprise "CRYSTALS-Kyber". Key encapsulation, e.g., protects cryptographic keys through encryption, reducing the risk of key exposure, simplifies key management, and support interoperability.

In particular, the method may further comprise generating, encapsulating, and/or decapsulating a cryptographic key for post-quantum secure communication.

The key encapsulation mechanism may be implemented in a central key generation function configured to provide different key generation algorithms including a key generation primitive of the post-quantum secure key encapsulation mechanism. This allows interoperability with various software applications compatible with the central key generation function.

In some embodiments, the method further comprises providing a key management application programming interface (API) for a software application of the vehicle. The API comprises a key encapsulation and a key decapsulation mechanism for key encapsulation and/or key decapsulation using a post-quantum secure key encapsulation/decapsulation primitive. In this way, interoperability with different software applications may be further facilitated.

The key management API may be implemented in a middle abstraction layer between the upper and lower layer. The middle abstraction layer includes a crypto interface configured for linking a crypto driver object to the crypto service manager.

The method may further comprise providing a PQC key encapsulation and/or key decapsulation function to the crypto service manager and to the crypto interface.

A skilled person having benefit from the present disclosure will appreciate that the proposed approach may be implemented as a computer program.

Accordingly, embodiments may provide a computer program comprising instructions which, when the computer program is executed by a computer, cause the computer to carry out the proposed method.

Such computer program may be stored on any kind of computer-readable data carrier.

So, embodiments may also provide a computer-readable data carrier having stored thereon the proposed computer program.

As well, the proposed approach may be implemented in an apparatus.

Accordingly, embodiments may provide an apparatus comprising one or more interfaces for communication and a data processing circuit configured to execute an embodiment of the proposed method.

In particular, the proposed approach may be implemented in automotive applications, e.g., an electronic control unit for a vehicle. In doing so, the vehicle may be protected from quantum computer-based security threats which may lead to undesired and/or dangerous behavior of the vehicle.

So, embodiments may provide an electronic control unit (ECU) for a vehicle. Such ECU, e.g., comprises the apparatus proposed herein.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

- Fig. 1: shows a flow chart schematically illustrating an embodiment of a method for securing a vehicle against quantum computer-based security threats;
- Fig. 2a: schematically visualizes a software architecture of an exemplary application;
- Fig. 2b: schematically visualizes an embodiment of a crypto software stack; and
- Fig. 3: shows a block diagram schematically illustrating an embodiment of an apparatus according to the proposed approach.

With the development of quantum computers, many classical cyber security measures become vulnerable. In practice, e.g., quantum computers may exploit their computing power to solve mathematical problems much faster than transistor-based computers. This enables quantum computers to outwit available classical encryption schemes, secure communication applications, and secure access control mechanisms. For example, traditional digital signature schemes like RSA (Rivest-Shamir-Adleman) and ECDSA (Elliptic Curve Digital Signature Algorithm) are vulnerable to Shor's algorithm, which can solve the underlying hard problems (integer factorization and discrete logarithms).

This may be particularly problematic in automotive applications where cyber-attacks may lead to undesired (physical) behavior of the vehicle.

The present disclosure provides a solution for protection against quantum computer-based security threats.

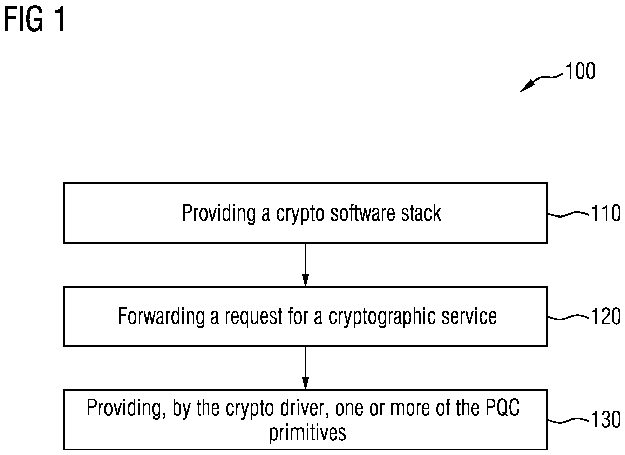

More details and aspects of the proposed solution/approach are described below in more detail with reference to Fig. 1.

Fig. 1 shows a flow chart schematically illustrating an embodiment of a method 100 for securing a vehicle against quantum computer-based security threats.

It is noted that the term "vehicle/s" is to be interpreted broadly in context of the present disclosure. So, vehicles according to the present disclosure may include any kind of vehicle, including various ground vehicles (e.g., car, truck, bus, motorcycle, and/or the like), various watercrafts (e.g., boat), various aircrafts (e.g., planes, helicopters), and/or a combination thereof (e.g., amphibious vehicle).

The skilled person will appreciate, that embodiments of the method 100 may be applied for vehicles of any kind.

As can be seen from the flow chart, method 100 includes providing 110 a crypto software stack comprising an upper layer including a crypto service manager (CSM or Csm) and a lower layer including a crypto driver which includes one or more post-quantum cryptography (PQC) primitives.

So, the software stack may be implemented using a layered (or multi-layer) software architecture where the software stack includes separate (logical) layers of which lower layers provide a specific set of services and/or functionalities to a layer above it. In context of the proposed method 100, the upper layer providing the crypto service manager, e.g., coordinates requests for and the provision of crypto services (e.g., encryption, decryption, signature generation, key generation, key encapsulation, key decapsulation, and/or the like). The lower layer provides the crypto driver comprising a library (e.g., including algorithms, functions, and/or data) for requested crypto services.

Method 100 comprises forwarding 120 a request for a cryptographic service from the crypto service manager to the crypto driver. For example, a Crypto Interface (CRYIF or Crylf) in a middle layer handles the lower layer Crypto Drivers, e.g., if there are multiple Crypto Drivers, the CRYIF forwards the CSM requests to the respective Crypto Driver.

In practice, e.g., the crypto service manager may handle requests for crypto services from one or more software applications. In doing so, the crypto service manager, e.g., schedules or generates a queue of the requested crypto services.

Further, method 100 comprises providing 130, by the crypto driver, one or more of the PQC primitives for providing the requested cryptographic service. For this, the crypto driver may call requested PQC primitives to execute them for the requested crypto services.

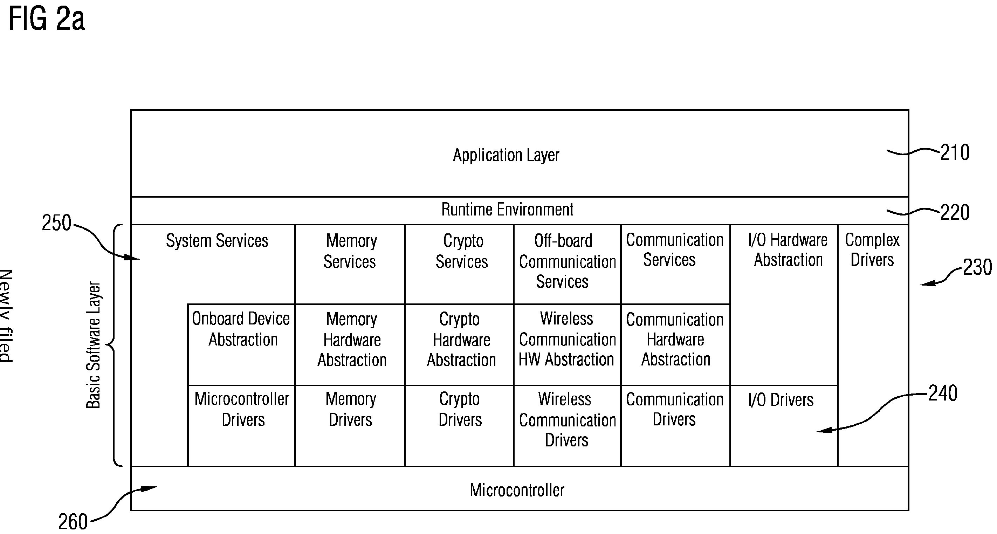

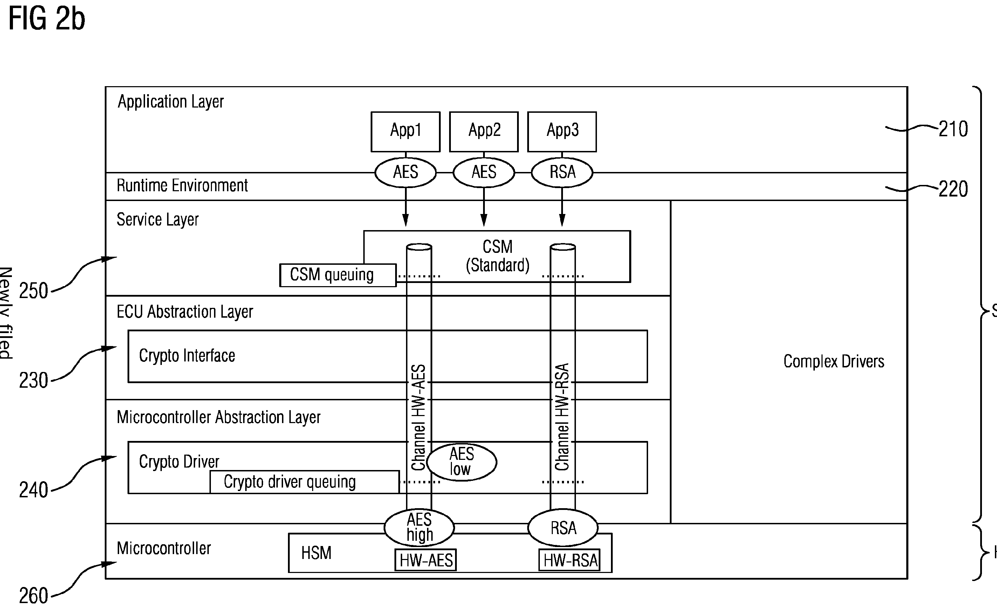

More aspects and details of a further embodiment and a particular layered software architecture are described in more detail below with reference to Figs. 2a and 2b.

Figs. 2a shows an application in accordance with a layered software structure as specified in the AUTOSAR standard and Fig. 2b shows the layered software architecture reduced to the crypto software stack.

So, it is noted that terms and object names mentioned below in connection with automotive applications can be or are to be understood as in context of the AUTOSAR standard (version 4.3.1).

As can be seen from Figs. 2a and 2b, the software stack may be divided in multiple logical layers including an application layer 210, a runtime environment (RTE) 220, a basic software layer (BSW) 250, and a hardware (microcontroller) layer 260.

The Basic Software layer is the lowest layer in the architecture. It is a standardized software layer that provides standard ECU functionality, e.g., OS, low level drivers, bus-communication, diagnostics, cryptography etc. The BSW is again structured in layers, a Microcontroller Abstraction Layer (MCAL) 230, an ECU Abstraction Layer 240, and a Services Layer 250. Some services like Complex Drivers and partly System Services span over multiple layers. The provided services are accessible via the RTE (abstraction layer).

The RTE provides communication services to application software of the Application layer 210. It is responsible for inter- and intra-ECU information exchange. Thus, it can act as interface for applications and makes them independent from the mapping to a specific ECU.

The Application layer 210 is the highest layer in the architecture and contains the application software. The application software interacts with the RTE to use functionalities of the BSW layer. It comprises Software Components and/or Sensor/Actuator Components. Software Components are completely ECU independent, while the latter are dependent on the specific hardware.

The Basic Software layer contains a Crypto stack. The Crypto stack provides standardized cryptographic functionalities and services. Thus, Software Components in the Application layer and system modules in the BSW layer don't need to implement cryptographic primitives themselves but can use the centralized Crypto stack available via the RTE or in case of system modules directly. In AUTOSAR, a cryptographic primitive refers to a fundamental cryptographic operation or building block that is utilized to provide various security functionalities within the AUTOSAR software architecture. It serves as a foundational component for implementing cryptographic algorithms and protocols. The Crypto Stack comprises the Crypto Service Manager (CSM), a Crypto Interface (CRYIF), and the Crypto Driver (Crypto module). Fig. 2b depicts the correlation of these modules in the Crypto stack, and their usage from the Application level. CSM and CRYIF are configured to use configured channels to communicate with the respective Crypto primitives, as further explained in the following subsequent sections. The Key Manager (KeyM) module is additionally part of the Crypto Stack. The security-related communication modules like Secure Onboard Communication (SecOC), Transport Layer Security (TLS), and Internet Protocol Security (IPSec) belonging to the Communication Stack.

The CSM is in the Service Layer and therefore the highest module in the Crypto Stack. It can act as algorithm-independent service interface that makes it possible for different applications to use the same service but with different underlying primitives or schemes, e.g., the service Hash with the primitive SHA2-256 or SHA3-513. The CSM provides an interface for the RTE which can be used by a Software Component or an API of the CSM can be directly called from a system module in the BSW layer. The CSM employs two different concepts, a direct API mainly for key management services and a job-based API mainly for cryptographic primitives. Main parts of the job-based concept comprise a job and a prioritized queue. A job, e.g., includes a referenced cryptographic primitive, a referenced key, a process priority, and an assigned queue. The job-based concept enables that multiple independent jobs can be processed in separate prioritized queues. The direct API can only handle synchronous calls while the job-based API can handle both synchronous and asynchronous calls. Depending on the request of the Software Component the direct key management interface is called, and the request is forwarded to the CRYIF module or a job is created with the given data and pushed into the assigned queue.

The CRYIF module lies between the CSM and Crypto module and provides abstraction from the Crypto Driver. The CRYIF module links a Crypto Driver Object to the CSM module via a channel. In detail, the CSM maps one queue to a CRYIF channel and the CRYIF maps one channel to a Crypto Driver Object. Through this abstraction the CRYIF enables that one CSM can map to multiple Crypto Driver Objects. Direct interface calls are just forwarded to the specific Crypto Driver.

The Crypto Driver is an MCAL module and thus the lowest in the Crypto stack. It contains the actual cryptographic primitives and key management algorithms. It also provides the functionality for key storage and handling, which includes the definition of the key structure with key elements. An instance of a Crypto Driver is called a Crypto Driver Object (CDO). A CDO includes a specific set of primitives and has its own independent workspace. Multiple CDOs can be configured that are independent from each other. Only one primitive can be performed at a time per CDO. Each CDO is mapped via a CRYIF channel to the CSM module. The public interface of the Crypto module is used by the CRYIF to process/cancel jobs and for key management functions. Then the CDO forwards the data to the actual crypto routine. The cryptographic operations of a CDO can be implemented in hardware or in software.

Each CDO has a specific set of cryptographic primitives. A cryptographic primitive is specified by a service, family, and mode. A primitive can be further refined by configuring a secondary family.
- CryptoPrimitiveService is the basic class of cryptographic operations, e.g., "Encrypt" or "SignatureGenerate".
- CryptoPrimitiveAlgorithmFamily specifies the cryptographic family of a service, e.g., AES or RSA.
- CryptoPrimitiveAlgorithmMode specifies the mode of the family. Different modes can be available for one family, e.g., ECB or CBC mode for the family AES.
- CryptoPrimitiveAlgorithmSecondaryFamily can be configured if the cryptographic primitive needs another cryptographic primitive like a "Hash" algorithm, e.g., SHA2_512 for service "SignatureGenerate" with family RSA.

The proposed approach now enables quantum safe cryptography in connection with such layered software architecture.

In particular, the present disclosure describes how PQC primitives, e.g., for a signature scheme for key generation, signature generation and/or signature verification as well as key encapsulation mechanism (KEM) can be implemented in such software architecture, e.g., in an AUTOSAR environment, as laid out in more detail below.

It is noted that, even though embodiments of the proposed solution are described particularly in connection with AUTOSAR, the proposed approach may be also applied for other layered software architectures.

KEMs are not considered by AUTOSAR so far, only a key exchange API is specified. Embodiments of the proposed solution add a new key management API for the encapsulation and decapsulation of a KEM. The key generation of a KEM can be performed by the already existing key generation interface of AUTOSAR. For the PQC signature scheme, the proposed solution implements the signature generation and verification as a cryptographic primitive (e.g., using the job-based approach of AUTOSAR). The key generation of the signature scheme is implemented using the existing key generation interface of AUTOSAR.

For the signature scheme, it is proposed to implement the PQC primitive "CRYSTALS-Dilithium" . Dilithium comprises three functions: key generation, signature generation, and signature verification.

The proposed approach particularly suggests adding a new algorithm family id for the primitive Dilithium, which is used in the configuration to enable the usage of Dilithium as a crypto service.

The key generation function of Dilithium generates a secret key and a public key for the signature scheme.

In practice, the signature scheme (e.g., of Dilithium) is implemented in a central key generation function configured to provide different key generation algorithms including a key generation primitive of the post-quantum secure signature scheme.

It is implemented, e.g., in the general AUTOSAR function Crypto_KeyGenerate (uint32 cryptoKeyld) which centralizes (is configured to call/execute) key generation algorithms of different primitives. Crypto_KeyGenerate is part of the direct key management API and therefore does not follow the job-based approach.

The proposed approach suggests providing a key element index for mapping key elements of the signature scheme to a key element identifier of the requested cryptographic service.

For AUTOSAR, to use the key generation, it is proposed to first set the AUTOSAR-defined key element CRYPTO_KE_KEYGENERATE_ALGORITHM, which specifies which key generation algorithm shall be used when calling the general function Crypto_KeyGenerate. Its data comprises the prior defined CRYPTO ALGOFAM_DILITHIUM. Then, Crypto_KeyElementSet is called and the key is set valid with the function Crypto_KeyValidSet() and Crypto_KeyGenerate() can be called. The result of this function is stored in the configured key elements. A public key is stored in the key elements RHO and T1 and, e.g., consists of 1184 bytes total. A secret key is stored in the key elements RHO, K, TR, S1, S2, and T0 and, e.g., consists of 2800 bytes total. AUTOSAR defines a key element index which maps key elements to a key element id of a crypto service. For Dilithium, it is proposed to extend this key element index with the key elements of the public key and secret key. In addition to these key elements, it is proposed to configure another set of key elements and a crypto primitive since Dilithium uses a random function in its key generation phase. Three 32-byte random values are provided for RHO, K, and S1, S2 sampling. For this, it is proposed to employ the crypto primitive RANDOM_AES_CTRDRBG for generating a random number based on the Advanced Encryption Standardbased on the key elements RANDOM_ALGORITHM, CIPHER_KEY, and RANDOM_SEED_STATE. These key elements may be set by Crypto_KeyElementSet() prior to the call of Crypto_KeyValidSet and Crypto_KeyGenerate.

The signature generation is implemented as a cryptographic primitive. Therefore, it is proposed to add the primitive to the configuration and specify the service, family, and mode. For the service, it is proposed to specify the value SIGNATURE_GENERATE which is a defined crypto service by AUTOSAR, so that one does not need to add a new service for Dilithium. For the family, it is proposed to specify CRYPTO ALGOFAM_DILITHIUM to call the algorithm family of Dilithium. For the mode, it is proposed to specify CRYPTO_ALGOMODE_NOT_SET since one does not need to employ a special mode. The secondary family is currently not configured. To generate the signature, the secret key is used. The secret key comprises the elements RHO, K, TR, S1, S2, and T0. For the signature generation, it is proposed to set the elements of the secret key and set the key to valid like described before in connection the key generation. Since the signature generation is a cryptographic primitive and therefore follows the job-based approach, it is proposed to set the plaintext and its length in the Crypto_JobPrimitivelnputOutputType in the fields inputPtr and inputLength respectively. Finally, calling Crypto_ProcessJob() is suggested to process the cryptographic primitive and the resulting signature will be written to the ouputPtr and outputLengthptr fields of the job. The signature generation of Dilithium may be only available with a synchronous processing and only in the operation mode SingleCall. This means that the state machine of the crypto primitive may not be able to process the operation modes Start, Update, and Finish individually but rather the whole calculations are processed within one call and the caller is blocked until the request is finished.

The implementation of signature verification of Dilithium is analogous to the signature generation of Dilithium, with the service SIGNATURE_VERIFY and the public key consisting of RHO and T1. The signature verification takes the plaintext and the signature as input and together with the public key calculates the verification result. Dilithium uses the extendable-output functions SHAKE-128 and SHAKE-256 for various purposes like expanding the public matrix A from a seed, sampling the secret vectors s1 and s2, and as a collision resistant hash (CRH). AUTOSAR currently only allows to configure one secondary primitive for a crypto service via the configuration parameter SecondaryFamiliy. Since Dilithium employs two secondary primitives, this cannot be mapped with AUTOSAR so far. Therefore, the two secondary primitives SHAKE-128 and SHAKE-256 are implemented as internal functions of Dilithium.

The PQC primitives may further comprise one or more primitives of a post-quantum secure key encapsulation mechanism (KEM) for key generation, key encapsulation, and/or key decapsulation. Accordingly, the proposed method may further comprise generating, encapsulating, and/or decapsulating a cryptographic key for post-quantum secure communication.

For the KEM, it is proposed, to implement, e.g., the PQC primitive "CRYSTALS-Kyber",. Kyber comprises three functions: key generation, key encapsulation, and key decapsulation. Similar to Dilithium, it is proposed to add a new algorithm family id for the primitive Kyber, to add the crypto service Kyber.

The key generation function of Kyber generates a secret key and public key.

In embodiments, the key encapsulation mechanism may be implemented in a central key generation function configured to provide different key generation algorithms including a key generation primitive of the post-quantum secure key encapsulation mechanism. For this, the key encapsulation mechanism may be implemented in a central key generation function configured to provide different key generation algorithms including a key generation primitive of the post-quantum secure key encapsulation mechanism, as laid out in more detail below.

For example, similar to Dilithium, it is implemented in the AUTOSAR specified function Crypto_KeyGenerate (uint32 cryptoKeyld) and therefore accessible via the direct key management API.

As can be seen in Fig. 2b, the key management API is implemented in a middle abstraction layer (here: ECU abstraction layer 230) between the upper and lower layer 250 and 240 and the middle abstraction layer includes a crypto interface configured for linking a crypto driver object to the crypto service manager.

To generate the key pair, it is proposed to first set the key element CRYPTO_KE_KEYGENERATE_ALGORITHM with the value of CRYPTO_ALGOFAM_KYBER via the Crypto_KeyElementSet(), set the key valid with the function Crypto_KeyValidSet(), and call Crypto_KeyGenerate(). The output is stored in the configured key elements. The public key KYBER_KEY PUBLIC consists of a size of 800 bytes and the secret key KYBER_KEY_SECRET of a size of 1632 bytes. It is proposed to extend the key element index with the public and secret key for Kyber. Since Kyber utilizes two 32-byte random values in the key generation phase, it is further proposed to configure the crypto primitive RANDOM_AES_CTRDRBG with the key elements RANDOM-_ALGORITHM, CIPHER_KEY, and RANDOM_SEED_STATE.

In embodiments of the proposed approach, the cryptographic service comprises key encapsulation and/or generation of a signature. For this, also, Kyber may be used.

For the key encapsulation of Kyber a new interface Crypto_KeyEncapsulateCalcEnc() may be introduced/provided, because AUTOSAR does not consider a key encapsulation mechanism in its standard so far. Since key encapsulation is a key management algorithm, this new interface is part of the key management API and therefore does not follow the job-based approach like signature generation for Dilithium. Which means that this key management service is only callable in a blocking mode resp. has a synchronous processing. Since this is a new interface of the Crypto Driver module, it is proposed to adapt the CRYIF and CSM module of the Crypto stack to make this key management service accessible to other components in the AUTOSAR architecture. Therefore, it is proposed to add the function Csm_KeyEncapsulateCalcEnc() in the CSM module and the function Crylf_KeyEncapsulateCalcEnc() in the CRYIF module.

For the configuration of the key encapsulation, it is proposed to first set the AUTOSAR-defined key element CRYPTO_KE_KEYEXCHANGE_ALGORITHM with the value of the algorithm family id of Kyber. The original intent of the key element CRYPTO_KE_KEYEXCHANGE ALGORITHM is to decide which key exchange algorithm shall be used. Since a KEM can be seen as a unidirectional key exchange, it is proposed to use this key element. After setting the key to valid, one can call the key encapsulation function Crypto_KeyEncapsulateCalcEnc() with the public key of the peer as an input parameter with a size of 800 bytes. The result of this function is the ciphertext to be transferred to the peer and the shared secret. The ciphertext is returned via the function parameter CiphertextPtr consisting of 768 bytes. The shared secret is stored in the AUTOSAR-defined key element CRYPTO_KE_KEYEXCHANGE_SHAREDVALUE with a size of 32 bytes. Again, it is proposed to utilize a key element original intended for key exchange service. Additionally,, it is proposed to configure and set the crypto primitive RANDOM_AES_CTRDRBG with its key elements, since the encapsulation needs to generate a 32 byte random secret.

For the key decapsulation of Kyber, it is proposed to also introduce a new key management interface Crypto_KeyEncapsulateCalcDec() just like for the encapsulation. Therefore, it is proposed to add the new interface in the CRYIF and CSM module accordingly.

For the configuration of the decapsulation, it is proposed to use the AUTOSAR-defined key elements CRYPTO_KE_KEYEXCHANGE_PRIVKEY and KEYEXCHANGE_SHAREDVALUE initially intended for Key Exchange. To use the key decapsulation, one may set the key elements CRYPTO_KE_KEYEXCHANGE_ALGORITHM and CRYPTO_KE_KEYEXCHANGE_PRIVKEY and call Crypto_KeyEncapsulateCalcDec() with a ciphertext (e.g., ciphertext provided by a software application/client application) as an input parameter. The ciphertext may be handed over via the Crylf and the Csm_KeyEcnapsulateCalcDec. The resulting shared secret is stored in the key element CRYPTO_KE_KEYEXCHANGE-_SHAREDVALUE.

Kyber provides various hash functions of the Keccak family during its key generation, encapsulation, and decapsulation phase. These hash functions include SHA3-256 and SHA3-512, SHAKE-128 as a XOF, and SHAKE-256 as a PRF and KDF. The hash functions are implemented as internal functions of Kyber.

For the key encapsulation mechanism Kyber, embodiments of the proposed solution add a new key management API for the encapsulation and decapsulation. Another idea would be to use the existing key management API of the key exchange for the encapsulation and decapsulation of a KEM. In this case, the encapsulation could be mapped to the function Crypto_KeyExchangeCalcPubVal and the decapsulation could be mapped to the function Crypto_KeyExchangeCalcSecret. However, the function parameters are not congruent and thus a misuse of the parameters and additional key elements may need to be taken into account. Both Dilithium and Kyber may use multiple secondary primitives for various hash applications. Even though AUTOSAR may not support multiple secondary primitives, Dilithium and Kyber may use exclusively symmetric primitives based on Keccak. One implementation improvement would be to combine the symmetric primitives of Dilithium and Kyber.

Steps of the proposed approach may be executed entirely by a computer. So, embodiments may provide a computer-implemented method corresponding to the described method. The proposed approach may be implemented in software, e.g., a computer program, and/or multiple computer programs.

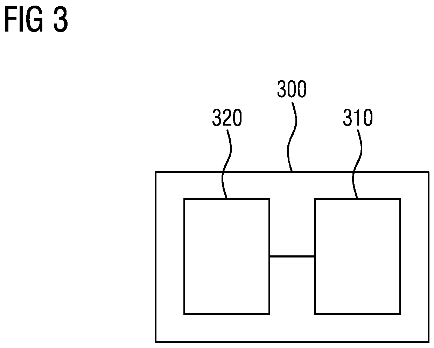

Also, the proposed approach may be implemented in an apparatus, as laid out in more detail below with reference to Fig. 3.

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

In practice, the proposed apparatus may be installed on a vehicle, e.g., in electronic control unit for a vehicle.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for securing a vehicle against quantum computer-based security threats, the method (100) comprising:
providing (110) a crypto software stack comprising an upper layer including a crypto service manager and a lower layer including a crypto driver which includes one or more post-quantum cryptography, PQC, primitives;
forwarding (120) a request for a cryptographic service from the crypto service manager to the crypto driver; and
providing (130), by the crypto driver, one or more of the PQC primitives for providing the requested cryptographic service.

2. The method (100) of claim 1, wherein the cryptographic service comprises key encapsulation and/or generation of a signature.

3. The method (100) of claim 1 or 2, wherein the PQC primitives include one or more primitives of a post-quantum secure signature scheme for key generation, signature generation and/or signature verification.

4. The method (100) of claim 3, wherein the method (100) further comprises generating a key and/or a signature using the key, and/or verifying a signature for post-quantum secure communication.

5. The method (100) of claim 3 or 4, wherein the signature scheme is implemented in a central key generation function configured to provide different key generation algorithms including a key generation primitive of the post-quantum secure signature scheme.

6. The method (100) of any one of the claims 3 to 5, wherein the method (100) further comprises providing a key element index for mapping key elements of the signature scheme to a key element identifier of the requested cryptographic service.

7. The method (100) of any one of the preceding claims, wherein the PQC primitives comprise one or more primitives of a post-quantum secure key encapsulation mechanism for key generation, key encapsulation, and/or key decapsulation.

8. The method (100) of claim 7, wherein the method (100) further comprises generating, encapsulating, and/or decapsulating a cryptographic key for post-quantum secure communication.

9. The method (100) of claim 7 or 8, wherein the key encapsulation mechanism is implemented in a central key generation function configured to provide different key generation algorithms including a key generation primitive of the post-quantum secure key encapsulation mechanism.

10. The method (100) of any one of the claims 7 to 9, wherein the method (100) further comprises providing a key management application programming interface, API, for a software application of the vehicle, and wherein the API comprises a key encapsulation and a key decapsulation mechanism for key encapsulation and/or key decapsulation using a post-quantum secure key encapsulation/decapsulation primitive.

11. The method (100) of claim 10, wherein the key management API is implemented in a middle abstraction layer between the upper and lower layer, and wherein the middle abstraction layer includes a crypto interface configured for linking a crypto driver object to the crypto service manager.

12. A computer program comprising instructions which, when the computer program is executed by a computer, cause the computer to carry out the method (100) of any one of the claims 1 to 11.

13. A computer-readable data carrier having stored thereon the computer program of claim 12.

14. An apparatus (300) comprising:
one or more interfaces (310) for communication; and
a data processing circuit (320) configured to execute the method (100) of any one of the claims 1 to 11.

15. An electronic control unit, ECU, for a vehicle, wherein the ECU comprises the apparatus (300) of claim 14.
